# EUROPEAN PATENT APPLICATION

(11) **EP 4 510 304 A1**
(43) Date of publication of application: **19.02.2025**
(21) Application number: 23191300.5
(22) Date of filing: 14.08.2023
(51) Int. Cl.: H01M 10/613, H01M 10/625, H01M 10/653, H01M 10/6552, H01M 10/6554, H01M 10/658

(54) **COOLING SYSTEM FOR THERMAL RUNAWAY CONDITIONS AND ENERGY STORAGE AND AIRCRAFT EQUIPPED THEREWITH**

(71) Applicant: Airbus S.A.S., 31700 Blagnac (FR)
(72) Inventor: Friedl, Stephan, München (DE)
(74) Representative: OTN Airbus SAS

(57) **Abstract**

In order to mitigate the effects of thermal runaway on energy storage apparatuss (30), the invention proposes a cooling system (34) that includes a thermal interface member (36) for each energy storage cell (32). The thermal interface member (36) is connected to a heat exchanger (44) via a plurality of heat transport members (38). One heat transport member (38) is configured such that upon reaching a predetermined condition, the heat transport member (38) deactivates the transport of the heat. This can be achieved by a predetermined breaking portion (42), which may comprise a rupture disk deliberate enfeeblement in the heat transport member (38). As a result, residual heat can be removed by a second heat transfer path, avoiding long time propagation of heat to neighbour cells.

## Description

The invention relates to a cooling system for protecting energy storage cells in thermal runaway conditions. The invention further relates to an energy storage apparatus and an aircraft equipped therewith that cooling system.

CN 109 802 194 B discloses a battery pack based on heat pipe cooling and a heat management method thereof. The heat conduction device has quick thermal response, high heat conduction efficiency, accurate temperature control, no noise and the like; the single battery modules in the battery module are uniformly heated, and simultaneously, the heat exchange coefficient is increased, so that the working stability, reliability and high efficiency of the battery are further ensured; and the whole structure is compact, the volume is small, and space is provided for the structural arrangement of the whole vehicle.

With increasing electrification of modern vehicles, especially aircraft, the need for safe and reliable energy storage is also increasing. Typically, the energy is stored in battery cells that are organized in energy storage modules. The energy storage modules not only include the battery cells, but also parts of the management system that controls the charging and discharging of the cells as well as protecting the cells from various damage types, such as deep discharge, overheating, short-circuit and the like.

One particular phenomenon can be an issue is thermal runaway of a battery cell. Thermal runaway typically describes a process that is accelerated by increased temperature, in turn releasing energy that further increases temperature. Thermal runaway may occur in situations where an increase in temperature changes the conditions in a way that causes a further increase in temperature, often leading to a destructive result.

Energy storage modules are typically equipped with measures to avoid thermal runaway in the first place, e.g., by managing the temperatures and electrical performance.

It is the object of the invention to mitigate the results of a possible thermal runaway.

The object is achieved by the subject-matter of the independent claims. Preferred embodiments are subject-matter of the dependent claims.

The invention provides cooling system for protecting energy storage cells in thermal runaway conditions, the cooling system comprising:
- at least one thermal interface member that is configured for thermally coupling to an energy storage cell;
- a plurality of heat transport members each heat transport member being thermally coupled to the thermal interface member to allow heat transport away from the thermal interface member via the respective heat transport member,
   wherein at least one heat transport member is a cut-off heat transport member that is configured to cut-off heat transport upon exceeding a predetermined temperature threshold and that is thermally coupled to the thermal interface member.

In case of a thermal runaway of an energy storage cell enormous amounts of heat may be generated. The thermal interface member receives the generated heat and suddenly increases in temperature. As the cut-off heat transfer member, e.g., a heat pipe having a predetermined breaking point, is heated beyond its temperature threshold, heat transport is cut off. Other thermal interface members that are connected to the same cut-off heat transfer members are also cut off from the heat transport. The remaining path is used for transporting away the heat generated in the thermal runaway. With this configuration, other thermal interface members and hence energy storage cells can be protected from receiving the heat due to thermal runaway.

Preferably, at least one heat transport member is thermally coupled to the thermal interface member via a first thermal resistivity. Preferably, the cut-off heat transfer member is coupled to the thermal interface member via a second thermal resistivity that is smaller than the first thermal resistivity. Preferably, thermal interface members that are neighbouring each other along a heat transfer path along the heat transfer members are thermally coupled thereto with the first and second thermal resistivity in an alternating manner.

The addition of different thermal resistivities allows a definition, which cut-off heat transfer member may break in case of thermal runaway. Typically the cut-off heat transfer member that is connected to the thermal interface member that is affected by thermal runaway via the lower resistivity will break. On the other hand, the unaffected thermal interface members that are thermally coupled via the greater resistivity are better protected from the heat transferred due to thermal runaway. Consequently, a better protection of neighbouring energy storage cells is possible.

Preferably, the cooling system further comprises a heat exchanger that is thermally coupled to at least one heat transport member, preferably to at the least one or to each cut-off heat transport member.

A heat exchanger may continuously transfer heat away from the system. In particular in case of thermal runaway, the heat exchanger may increase the heat transfer so as to limit the temperature increase of the system.

Preferably, the heat exchanger comprises a heat exchanger member that is thermally coupled to the heat transport member to receive the heat transported from the thermal interface member via the heat transport member. Preferably, the heat exchanger member includes a fluid channel for a cooling medium to transport the received heat away from the heat exchanger member. Fluid cooling may further increase the cooling rate.

Preferably, the cooling system further comprises at least one heat exchanger electrical insulation barrier that is arranged to electrically insulate a heat transport member portion that is thermally coupled to the heat exchanger therefrom. Typically good heat conductors are also electrical conductors. The addition of an electrical insulation can prevent the heat exchanger gets unwantedly supplied with electrical voltage/current. This allows reduction of risk of injury to persons or of damage to the system.

Preferably, the cooling system further comprises at least one heat transport member electrical insulation barrier that is arranged to electrically insulate the heat transport member portion that is thermally coupled to the thermal interface member therefrom. The electrical insulation may also electrically separate the thermal interface member, such that the heat transfer system remains free of voltage/current.

Preferably, the cut-off heat transport member is thermally coupled to the heat exchanger. Preferably, exclusively the cut-off heat transport member is thermally coupled to the heat exchanger. The cut-off heat transport members are used to transfer the heat away from the thermal interface members. Other, non-cut-off heat transfer members, can be used to support thermal equilibrium.

Preferably, at least two heat transport members are arranged to form a crossing. Preferably, the thermal interface member is arranged in thermal contact with the heat transport members at the crossing. Preferably, one of the heat transport members is the cut-off heat transport member and the other is a non-cut-off heat transport member. Preferably, the heat transport members each contact the thermal interface member but not each other. Preferably, the thermal interface member is thermally connected to the cut-off heat transfer member via the first thermal resistivity. Preferably, the thermal interface member is thermally connected to the non-cut-off heat transfer member via the second thermal resistivity.

With this configuration, a grid of energy storage cells can be cooled. The heat transfer paths can be separated into paths along the non-cut-off heat transfer members that help to distribute the heat better and the paths along the cut-off heat transfer members that are able to more directly remove heat in the regular operation. In case of thermal runaway of an energy storage cell, the cut-off member, especially if coupled via smaller thermal resistivity, breaks and the heat is distributed along the non-cut-off and the intact cut-off members away from the system. It is thus possible to protect the other energy storage cells by directing the heat away and simultaneously decoupling energy storage cells that are coupled together with smaller thermal resistivity.

Preferably, the thermal interface member is made from a metal or metal alloy. Preferably, the metal or metal alloy is chosen from a group consisting of aluminium, copper, bronze, brass, aluminium bronze, and copper brass. Preferably, the first thermal resistivity is given by the bulk material of the thermal interface member and/or a contact area with the thermal interface member and/or a distance of a gap between the thermal interface member and the heat transport member. Preferably, the second thermal resistivity is given by an interface material of the thermal interface member and/or a contact area between the thermal interface member and the heat transport member and/or a distance of a gap between the thermal interface member and the heat transport member. The thermal interface member can be formed as a cuboid block or cylinder shape, preferably depending on the shape of the energy storage cells. Furthermore, the thermal interface members may add thermal inertia that, during thermal runaway, may take the initial heat dump and serve as a means to attenuate the peak heat. Depending on the interface material and/or the contact area between the thermal interface member and the heat transport member, the thermal resistivity can be tailored to the desired values.

Preferably, the interface material is a ceramic material or a plastic material, preferably PAEK, more preferably PEEK. Choosing thermally resistant materials or designing the contact area accordingly allows to maintain the higher resistivity thermal connection during thermal runaway more reliably. The temperatures may increase too much for regular plastic materials, e.g., ABS, PP, etc. to maintain their solid state. In particular, for mechanical reasons, it is also desirable to avoid exceeding the glass transition temperature. High-performance materials such as ceramics and polyaryletherketones combine larger thermal resistivity with thermal stability.

The invention provides an energy storage apparatus for storing electrical energy in energy storage cells, the energy storage apparatus comprising a preferred cooling system, and at least one energy storage cell that is thermally coupled to the thermal interface member for cooling. The cooling system is advantageously used in an energy storage apparatus. The energy storage apparatus typically contains multiple cells that are combined into an energy storage that is managed by a management system.

Preferably, the energy storage apparatus comprises a management system that is configured to detect a thermal runaway condition and, in response to determining a thermal runaway condition, inactivates the energy storage cells. Thermal runaway detection is known and therefore not described in more detail. Inactivation of the energy storage cells reduces the thermal load and makes way for increased heat conduction to transfer away the heat due to thermal runaway.

Preferably, the management system is configured to inactivate the energy storage cells by electrically disconnecting the energy storage cells. Preferably, the management system is configured to inactivate the energy storage cells by controlled discharge. Electric disconnection reduces the risk of adding heat to be transported away in addition to the thermal runaway. Controlled discharge may also do the same in particular, if the discharging resistor is not connected to the cooling system as described here.

The invention provides an aircraft, preferably a passenger aircraft or a UAV, comprising a preferred cooling system and/or a preferred energy storage apparatus.

The invention provides a method for protecting energy storage cells in thermal runaway conditions, the method comprising:
- receiving heat by a thermal interface member from an energy storage cell;
- transporting the heat away from the thermal interface member by at least one heat transport member and by at least one cut-off heat transport member,
wherein, if the energy storage cell is in a thermal runaway condition, the heat produced by the thermal runaway causes the cut-off heat transport member to stop transporting heat, and the heat is transported by the remaining heat transport member in thermal contact with the thermal interface member.

Embodiments of the invention are described in more detail with reference to the accompanying schematic drawings that are listed below.
Fig. 1 depicts an embodiment of an aircraft;
Fig. 2 depicts a top view of an energy storage apparatus;
Fig. 3 depicts a side view of the energy storage apparatus;
Fig. 4 depicts a more detailed view of a thermal interface member;
Fig. 5 depicts a schematic of normal operation of the energy storage apparatus;
Fig. 6 depicts a schematic of a thermal runaway condition of the energy storage apparatus of Fig. 5;
Fig. 7 depicts a schematic of another energy storage apparatus; and
Fig. 8 depicts a schematic of a thermal runaway condition of the energy storage apparatus of Fig. 7.

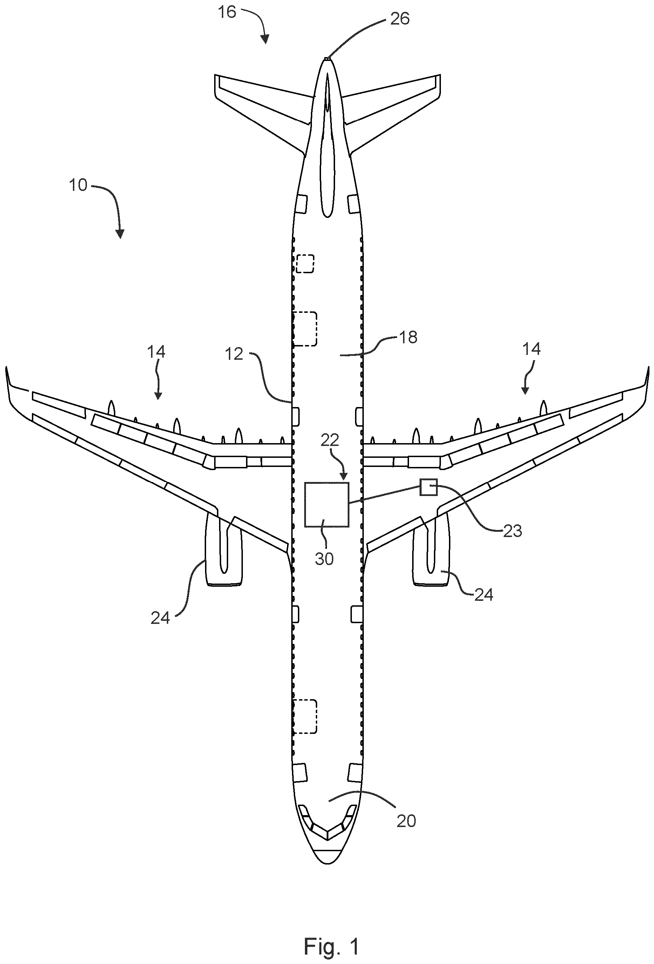

Fig. 1 depicts an aircraft 10. The aircraft typically includes a fuselage 12 to which a pair of wings 14 is attached. Furthermore, the aircraft 10 comprises a tailplane section 16 which is arranged at the back of the fuselage 12. The fuselage 12 is typically divided into a passenger cabin 18 and a cockpit 20.

The aircraft 10 comprises an electrical system 22 which supplies electrical power to various components 23 of the aircraft 10, such as actuators, pumps, and in-flight entertainment systems.

The electrical system 22 is typically provided with electrical power produced by an alternator that is driven by the engines 24 or an auxiliary power unit (APU) 26.

The electrical system 22 may include at least one energy storage apparatus 30. The energy storage apparatus 30 is integrated into the electrical system 22 to be charged and discharged, as the case may be.

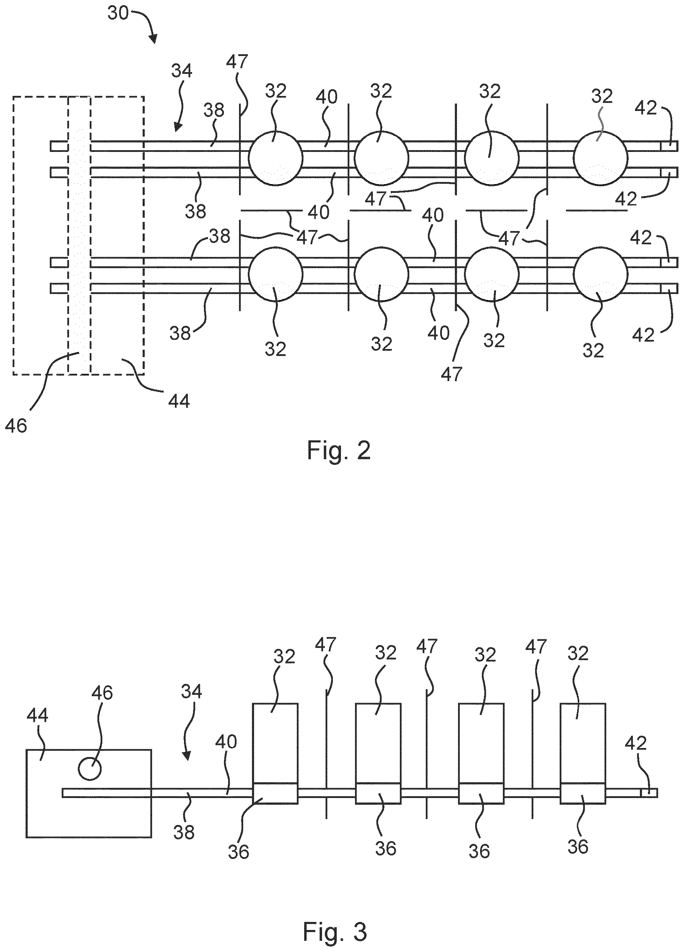

Referring to Fig. 2 and Fig. 3, the energy storage apparatus 30 comprises a plurality of energy storage cells 32. The energy storage cells 32 may be configured as rechargeable batteries.

The energy storage apparatus 30 comprises a cooling system 34. The cooling system 34 is generally configured to cool the individual energy storage cells 32, as they are heating up during charging or discharging.

Furthermore, the cooling system 34 is there to protect the energy storage cells 32 in case of thermal runaway in one of the energy storage cells 32. The cooling system 34 can mitigate the effects of a thermal runaway of an energy storage cells 32 on its neighbouring energy storage cells 32.

The cooling system 34 comprises a plurality of thermal interface members 36. The thermal interface members 36 are made from a heat conductive material, such as aluminium. The thermal interface members 36 may be made from a heat conductive material that is electrically insulating. The thermal interface member 36 may have a roughly cuboid shape or a circular shape depending on the outer contour of the energy storage cells 32. Each energy storage cell 32 is mounted to a thermal interface member 36.

The cooling system 34 comprises a plurality of heat transport members 38. Each heat transport member 38 may be configured as a heat pipe. Each thermal interface member 36 is in thermal contact with at least two heat transport members 38. In this example, each heat transport member 38 is configured as a cut-off heat transport member 40.

The cut-off heat transport member 40 has a predetermined temperature threshold, at which the heat transport by the cut-off heat transport member 40 is deactivated. The cut-off heat transport member 40 may include a predetermined breaking portion 42. The predetermined breaking portion 42 is configured to break, when a predetermined condition is met. The condition may be a predetermined temperature or a predetermined pressure. The predetermined breaking portion 42 may be formed by a rupture disk or deliberate enfeeblement of a portion of the heat transport member 38. Independent of the concrete mechanism, the cut-off heat transport member 40 deactivates its heat transport, when a predetermined temperature threshold is exceeded.

The cooling system 34 may comprise a heat exchanger 44. The heat exchanger 44 is thermally coupled to all heat transport members 38. The heat exchanger 44 is made of a thermally conductive material, such as aluminium, copper or the like. The heat exchanger 44 may instead be made from a heat conductive material that is electrically insulating. The heat exchanger 44 is typically configured as a massive cuboid member in order to provide a substantial heat sink.

The heat exchanger 44 may comprise a fluid channel 46 which allows the passage of cooling fluid to increase heat transport away from the energy storage cells 32. The cooling fluid is preferably an electrically insulating cooling fluid.

The cooling system 34 may comprise at least one thermal barrier 47. The thermal barrier 47 is thermally separates individual energy storage cells 32 from each other. The thermal barrier 47 may take the form of a thermal insulation or thermal compartment. The thermal barrier 47 is configured to prevent the transmission of heat radiation, in particular to the neighbouring energy storage cells 32. The thermal barrier 47 may be configured to prevent hot vapours from impinging on the neighbouring energy storage cells 32.

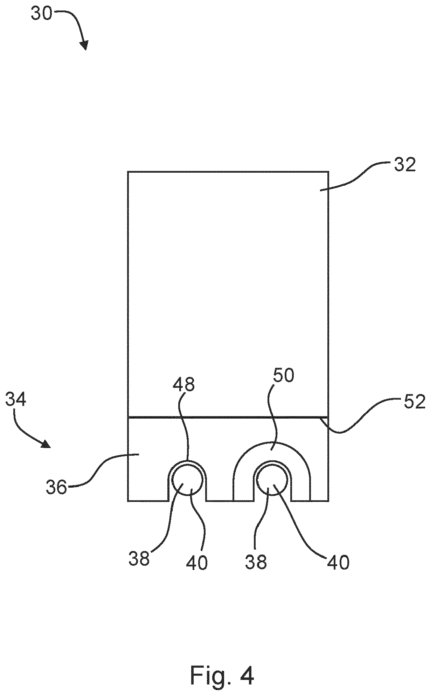

Referring to Fig. 4, the thermal coupling of the energy storage cell 32 to its thermal interface member 36 is described in more detail. The thermal interface member 36 includes a low resistivity contact portion 48 and a high resistivity contact portion 50.

The low resistivity contact portion 48 exhibits a first thermal resistivity that is smaller than that of the high resistivity contact portion 50. Preferably, the low resistivity contact portion 48 has a direct contact between the heat transport member 38 and the thermal interface member 36.

The high resistivity contact portion 50 exhibits a second thermal resistivity that is greater than that of the low resistivity contact portion 48. The high resistivity contact portion 50 can be made of a ceramic material or a plastic material. If a plastic material is chosen, then the choice usually falls on a high performance thermoplastic material, such as PAEK and preferably PEEK.

Energy storage cell 32 is mounted to the thermal interface member 36 so as to have a good thermal contact. This can be achieved by using heat conductive paste, a heat conductive adhesive or a heat conductive mechanical mount.

Either the cooling interface block is non conductive and a non conductive cooling liquid is used or the heat pipes needs to be insulated from the cooling interface block.

It is possible that different rows of energy storage cells 32 are electrically connected to the heat transport members 38 such that they are referenced to the electrical potential of the energy storage cells 32. The heat transport members 38, depending on the connection to the thermal interface member 36, can therefore have different voltage levels. The energy storage cell 32 may be mounted to thermal interface member 36 with a heat transport member electrical insulation barrier 52 disposed therebetween to prevent the different voltage levels from connecting.

The thermal interface member 36 and in turn the heat transport member 38 can be electrically insulated from the energy storage cell 32. This is particularly useful, for the low resistivity contact portion 48, which typically in addition to being thermally highly conductive is also electrically conductive.

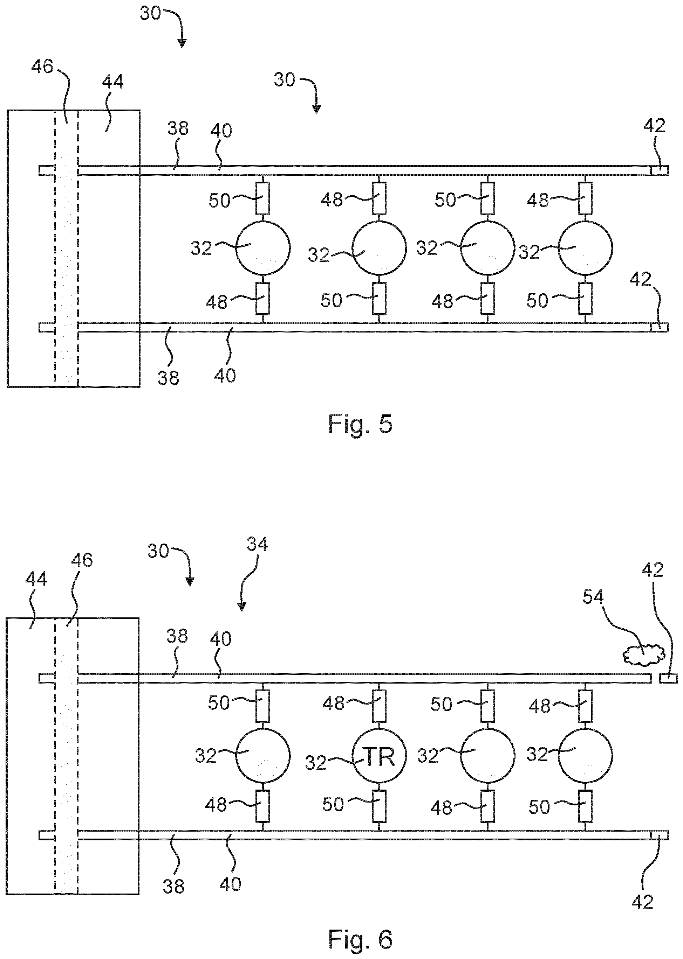

Referring to Fig. 5, it can be seen that in a typical arrangement, the thermal interface members 36 are connected to the heat transport members 38 with the low resistivity contact portion 48 and the high resistivity contact portion 50 alternating along the length of the cut-off heat transport member.

During normal operation, the energy storage cells 32 are charged or discharged and the heat generated by this process is transferred via the low resistivity contact portion 48 to the cut-off heat transport member 40, which in turn transports the heat to the heat exchanger 44 where it is either dissipated or transported away via cooling fluid.

As depicted in Fig. 6, one energy storage cell 32 experiences a thermal runaway condition (TR). As soon as the thermal runaway condition is detected by a battery management system (not shown) disconnects the energy storage cells 32 from the electrical circuit. It is also possible for the battery management system to perform a controlled fast discharge of the energy storage cells 32. These measures are well known art and therefore not described in more detail.

During the thermal runaway, the affected energy storage cell 32 generates substantial amounts of heat. The heat is transferred via the low resistivity contact portion 48 to the heat transport member 38, which in turn also starts to heat up. Due to massive amounts of heat generated, the predetermined breaking point of the cut-off heat transport member 40 is reached and the predetermined breaking portion 42 fails, whereby the heat transport is suddenly stopped. Depending on the type of heat transport member 38, heated heat transport fluid 54 may be ejected, which in turn transports a substantial amount of heat away form the energy storage cells 32.

As the unaffected energy storage cells 32 are shut off, the heat generated by the thermal runaway condition may be transported via the high resistivity contact portion 50 to the heat transport member 38 connected thereto. It should be noted that the high resistivity contact portion 50 is usually chosen to be made of a material that can withstand the amount of heat generated during thermal runaway.

As only the affected energy storage cell 32 is generating heat, the full heat transport capacity of the heat transport member 38 is available to transport the heat away towards the heat exchanger 44, where it can be dissipated or transported away by cooling fluid.

In addition, the thermal barrier 47 is able to contain the hot and possibly burning vapours to the affected energy storage cell 32. Also, the heat radiation can be prevente from affecting the neighbouring energy storage cells 32.

As a result, it is possible to protect the unaffected storage cells 32 from the heat generated during thermal runaway.

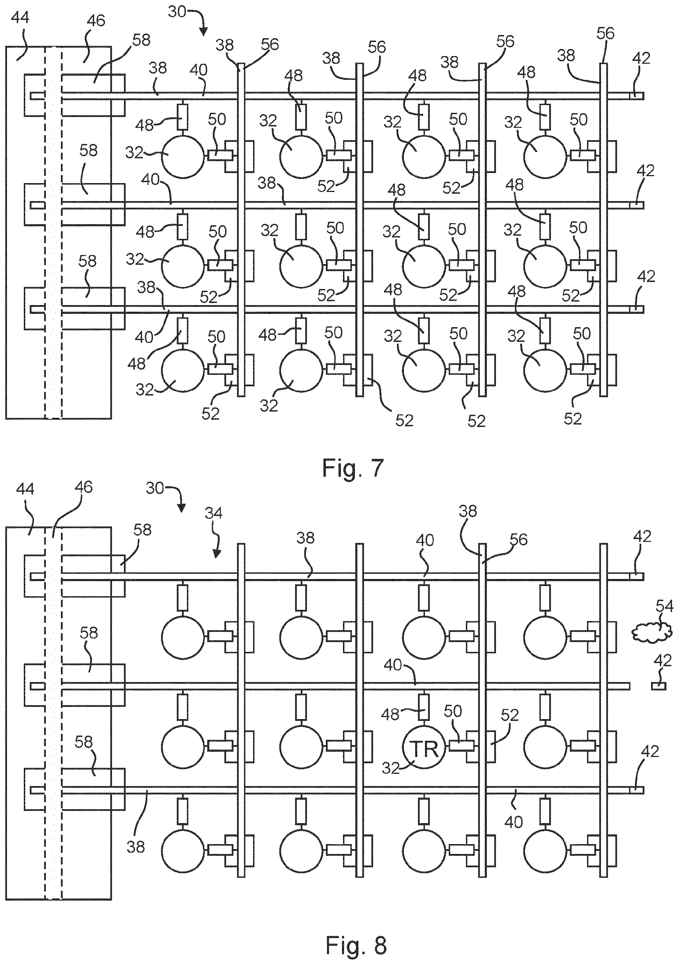

Referring to Fig. 7, another energy storage apparatus 30 is described insofar as it differs from the previously described energy storage apparatus. The energy storage apparatus 30 in addition comprises a plurality of non-cut-off heat transport members 56. The non-cut-off heat transport members 56 may be configured as heat pipes. In contrast to the cut-off heat transport members 40, the non- cut-off heat transport members 56 do not have a predetermined breaking point and under regular circumstances are always operating, under conditions of thermal runaway.

As depicted in Fig. 7, the cut-off heat transport members 40 are in thermal contact with thermal interface member 36 via the low resistivity contact portion 48, whereas the non-cut-off heat transport members 456 are in contact via the high resistivity contact portion 50. As the high resistivity contact portion 50 is typically chosen to be made from a material that is electrically non-conductive, the high resistivity contact portion 50 may also function as the heat transport member electrical insulation barrier 52.

The cooling system 34 may additionally comprise a plurality of heat exchanger electrical insulation barriers that are arranged between the cut-off heat transport members 40 and the heat exchanger 44 in order to electrically insulate them from each other.

During normal operation, the energy storage cells 32 are charged or discharged and the heat generated by each energy storage cell is typically transported via the low resistivity contact portion 48 towards the heat exchanger 44 where it can be dissipated or transported away by cooling fluid.

Referring to Fig. 8, a thermal runaway condition is described in more detail. One of the energy storage cells 32 experiences a thermal runaway. Similarly to before, the battery management system switches off the other energy storage cells 32 and may or may not perform a controlled emergency discharge. The heat generated by the thermal runaway is initially transported via the low resistivity contact portion 48 to the cut-off heat transport member 40. The cut-off heat transport member 40 reaches the predetermined breaking point and the predetermined breaking portion 42 breaks, ejecting heat transport fluid 54 which gets of rid of the initial heat. With this, the energy storage cell 32 is thermally disconnected from its neighbours in the same row (second row of Fig. 8). The heat is further transported via the high resistivity contact portion 50, a non-cut-off heat transport member 56 to all remaining cut-off heat transport members 40. Thus, in this example, the heat support capacity of two heat transport members are fully available to the affected energy storage cell 32. In addition, the neighbouring cells along the column (the third column in Fig. 8) are protected from the heat by the high resistivity contact portion 50. As a result, the heat from thermal runaway is distributed broadly and cannot reach the level, where the unaffected energy storage cells 32 take damage.

In order to mitigate the effects of thermal runaway on energy storage apparatuss (30), the invention proposes a cooling system (34) that includes a thermal interface member (36) for each energy storage cell (32). The thermal interface member (36) is connected to a heat exchanger (44) via a plurality of heat transport members (38). One heat transport member (38) is configured such that upon reaching a predetermined condition, the heat transport member (38) deactivates the transport of the heat. This can be achieved by a predetermined breaking portion (42), which may comprise a rupture disk deliberate enfeeblement in the heat transport member (38). As a result, residual heat can be removed by a second heat transfer path, avoiding long time propagation of heat to neighbour cells.

### List of reference signs:

- 10: aircraft
- 12: fuselage
- 14: wing
- 16: tailplane section
- 18: passenger cabin
- 20: cockpit
- 22: electrical system
- 24: engine
- 26: auxiliary power unit (APU)
- 30: energy storage apparatus
- 32: energy storage cell
- 34: cooling system
- 36: thermal interface member
- 38: heat transport member
- 40: cut-off heat transport member
- 42: predetermined breaking portion
- 44: heat exchanger
- 46: fluid channel
- 48: low resistivity contact portion
- 50: high resistivity contact portion
- 52: heat transport member electrical insulation barrier
- 54: heat transport fluid
- 56: non-cut-off heat transport member
- 58: heat exchanger electrical insulation barriers

## Claims

1. . A cooling system (34) for protecting energy storage cells (32) in thermal runaway conditions, the cooling system (34) comprising:
- at least one thermal interface member (36) that is configured for thermally coupling to an energy storage cell (32);
- a plurality of heat transport members (38), each heat transport member (38) being thermally coupled to the thermal interface member (36) to allow heat transport away from the thermal interface member (36) via the respective heat transport member (38),
wherein at least one heat transport member (38) is a cut-off heat transport member (40) that is configured to cut-off heat transport upon exceeding a predetermined temperature threshold and that is thermally coupled to the thermal interface member (36).

2. . The cooling system (34) according to claim 1, wherein at least one heat transport member (38) is thermally coupled to the thermal interface member (36) via a first thermal resistivity, and the cut-off heat transport member (40) is coupled to the thermal interface member (36) via a second thermal resistivity that is smaller than the first thermal resistivity.

3. . The cooling system (34) according to any of the preceding claims, further comprising a heat exchanger (44) that is thermally coupled to at least one heat transport member (38), preferably to at the least one or to each cut-off heat transport member (40).

4. . The cooling system (34) according to claim 3, wherein the heat exchanger (44) comprises a heat exchanger member that is thermally coupled to the heat transport member (38) to receive the heat transported from the thermal interface member (36) via the heat transport member (38), wherein the heat exchanger member includes a fluid channel (46) for a cooling medium to transport the received heat away from the heat exchanger member.

5. . The cooling system (34) according to claim 3 or 4, further comprising at least one heat exchanger electrical insulation barrier (58) that is arranged to electrically insulate a heat transport member portion that is thermally coupled to the heat exchanger (44) therefrom.

6. . The cooling system (34) according to any of the preceding claims, further comprising at least one heat transport member electrical insulation barrier (58) that is arranged to electrically insulate the heat transport member portion that is thermally coupled to the thermal interface member (36) therefrom.

7. . The cooling system (34) according to any of the claims 3 to 6, wherein the cut-off heat transport member (40) is thermally coupled to the heat exchanger (44).

8. . The cooling system (34) according to any of the preceding claims, wherein at least two heat transport members (38) are arranged to form a crossing, and the thermal interface member (36) is arranged in thermal contact with the heat transport members (38) at the crossing, wherein one of the heat transport members (38) is the cut-off heat transport member (40).

9. . The cooling system (34) according to any of the preceding claims, wherein the thermal interface member (36) is made from a metal or metal alloy.

10. . The cooling system (34) according to claim 9, wherein the metal or metal alloy is chosen from a group consisting of aluminium, copper, bronze, brass, aluminium bronze, and copper brass.

11. . The cooling system (34) according to any of the preceding claims, wherein the first thermal resistivity is given by the bulk material of the thermal interface member (36) and/or a contact area between the thermal interface member (36) and the heat transport member (38) and/or a distance of a gap between the thermal interface member (38) and the heat transport member (38), wherein the second thermal resistivity is given by interface material between the thermal interface member (36) and the heat transport member (38) and/or a contact area between the thermal interface member (36) and the heat transport member (38) and/or a distance of a gap between the thermal interface member (38) and the heat transport member (38).

12. . The cooling system (34) according to claim 11, wherein the interface material is a ceramic material or a plastic material, preferably PAEK, more preferably PEEK, or a silicone material, preferably an aluminium oxide filled silicone.

13. . An energy storage apparatus (30) for storing electrical energy in energy storage cells (32), the energy storage apparatus (30) comprising a cooling system (34) according to any of the preceding claims, and at least one energy storage cell (32) that is thermally coupled to the thermal interface member (36) for cooling.

14. . An aircraft (10), preferably a passenger aircraft or a UAV, comprising a cooling system (34) according to any of the claims 1 to 12 and/or an energy storage apparatus (30) according to claim 13.

15. . A method for protecting energy storage cells (32) in thermal runaway conditions, the method comprising:
- receiving heat by a thermal interface member (36) from an energy storage cell (32);
- transporting the heat away from the thermal interface member (36) by at least one heat transport member (38) and by at least one cut-off heat transport member (40), wherein, if the energy storage cell (32) is in a thermal runaway condition, the heat produced by the thermal runaway causes the cut-off heat transport member (40) to stop transporting heat, and the heat is transported by the remaining heat transport member (38) in thermal contact with the thermal interface member (36).
